# EUROPEAN PATENT SPECIFICATION

(11) **EP 2 196 031 B1**
(45) Date of publication and mention of the grant of the patent: **01.05.2013**
(21) Application number: 08829573.8
(22) Date of filing: 03.09.2008
(51) Int. Cl.: H04N 7/26, H04N 7/34, H04N 7/50

(54) **METHOD FOR ALTERNATING ENTROPY CODING**
VERFAHREN ZUM ALTERNIEREN DER ENTROPIECODIERUNG
PROCÉDÉ POUR UN CODAGE D'ENTROPIE ALTERNANT

(30) Priority: 03.09.2007 NO 20074463
(43) Date of publication of application: 16.06.2010
(73) Proprietor: Cisco Systems International Sarl, 1180 Rolle (CH)
(72) Inventor: BJØNTEGAARD, Gisle, N-1415 Oppegård (NO)
(74) Representative: Kazi, Ilya
(86) International application number: PCT/NO2008/000313
(87) International publication number: WO 2009/031904

(56) References cited:
- EP-A- 0 831 660
- EP-A- 0 928 109
- EP-A- 0 987 900
- WO-A-94/08427
- WO-A-99/56472

## Description

### Field of the invention

The invention is related to entropy coding of transform coefficient data in video compression systems.

### Background of the invention

Transmission of moving pictures in real-time is employed in several applications like e.g. video conferencing, net meetings, TV broadcasting and video telephony.

However, representing moving pictures requires bulk information as digital video typically is described by representing each pixel in a picture with 8 bits (1 Byte). Such uncompressed video data results in large bit volumes, and can not be transferred over conventional communication networks and transmission lines in real time due to limited bandwidth.

Thus, enabling real time video transmission requires a large extent of data compression. Data compression may, however, compromise with picture quality. Therefore, great efforts have been made to develop compression techniques allowing real time transmission of high quality video over bandwidth limited data connections.

In video compression systems, the main goal is to represent the video information with as little capacity as possible. Capacity is defined with bits, either as a constant value or as bits/time unit. In both cases, the main goal is to reduce the number of bits.

Many video compression standards have been developed over the last years. Many of those methods are standardized through ISO (the International Standards organization) or ITU (the International Telecommunications Union). Besides, a number of other propriatory methods have been developed. The main standardization methods are:
ITU: H.261, H.262, H.263, H.264
ISO: MPEG1, MPEG2, MPEG4/AVC)

The first step in the coding process according to these standards is to divide the picture into square blocks of pixels, for instance 16x16 or 8x8 pixels. This is done for luminance information as well as for chrominance information.

The following prediction process significantly reduces the amount of bits required for each picture in a video sequence to be transferred. It takes advantage of the similarity of parts of the sequence with other parts of the sequence, and produces a prediction for the pixels in the block. This may be based on pixels in an already coded/decoded picture (called inter prediction) or on already coded/decoded pixels in the same picture (intra prediction). The prediction is mainly based on vectors representing movements

Since the predictor part is known to both encoder and decoder, only the difference has to be transferred. This difference typically requires much less capacity for its representation. The difference between the pixels to be coded and the predicted pixels is often referred to as a residual.

The residual represented as a block of data (e.g. 4x4 pixels) still contains internal correlation. A well-known method of taking advantage of this is to perform a two dimensional block transform. In H.263 an 8x8 Discrete Cosine Transform (DCT) is used, whereas H.264 uses a 4x4 integer type transform. This transforms 4x4 pixels into 4x4 transform coefficients and they can usually be represented by fewer bits than the pixel representation. Transform of a 4x4 array of pixels with internal correlation will probability result in a 4x4 block of transform coefficients with much fewer non-zero values than the original 4x4 pixel block.

Direct representation of the transform coefficients is still too costly for many applications. A quantization process is carried out for a further reduction of the data representation. Hence the transform coefficients undergo quantization. A simple version of quantisation is to divide parameter values by a number - resulting in a smaller number that may be represented by fewer bits. This is the major tool for controlling the bit production and reconstructed picture quality. It should be mentioned that this quantization process has as a result that the reconstructed video sequence is somewhat different from the uncompressed sequence. This phenomenon is referred to as "lossy coding".

Finally, a so-called scanning of the two dimensional transform coefficient data into a one dimensional set of data is performed, and the one dimensional set is further transformed according to en entropy coding scheme. Entropy coding implies lossless representation of the quantized transform coefficients.

The above steps are listed in a natural order for the encoder. The decoder will to some extent perform the operations in the opposite order and do "inverse" operations as inverse transform instead of transform and de-quantization instead of quantization.

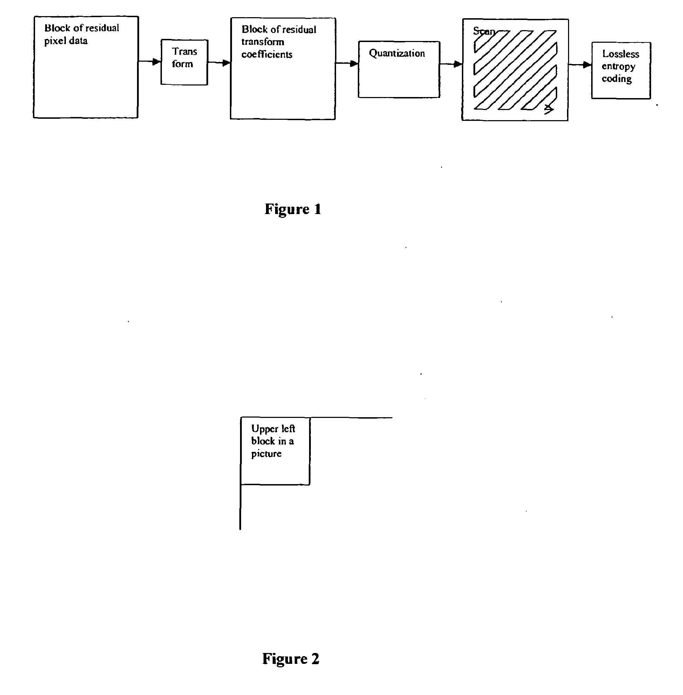

The above operations are depicted in figure 1. The entropy process will be explained in more details in the following.

The transform coefficients are conventionally depicted with low frequency coefficient (or DC coefficient) positioned in the upper left corner. Then the horizontal and vertical spatial frequency increase to the right and down. The scanning indicated in figure 1 is a scanning from low to high spatial frequency coefficients, which is normally referred to as zig-zag scanning. In the entropy coding, the coefficients may be scanned in the direction indicated by the arrow, which is referred to as forward scanning, but in other cases the entropy coding may be more efficient if "inverse scanning" (high to low frequency) is used.

After quantization the transform coefficients are represented as signed integer numbers. These numbers are to be conveyed to the decoder without modifications. This is referred to as lossless representation or coding.

At the same time the model for representing the transform coefficients should result in the use of as few bits as possible. Thus, entropy coding is used for performing an optimal representation based on the expected frequency of occurrence of events. This is based on statistics derived from normal image content.

The statistics are used to design Variable Length Code (VLC) tables to be used for coding. The basic idea is to allocate short code words to frequent event - all done in accordance with the statistics.

This will result in low bit usage as long as the data to be coded fit reasonably well with the underlying statistics. In the opposite case, when very untypical data is to be coded, the use of bits may become too high. In situation where the data to be coded fail to fit with the "normal" statistics, occurrences that are represented by a large number of bit will become more frequent. This may be the situation at rapid and lasting light changes in the environment where the video image is captured. This will harm the quality of the encoded/decoded image as the coding process automatically will adjust the quantisation intervals to comply the frequent occurrence of long code words.

The published application EP-A-0 831 660 discloses a method for coding/decoding quantized low frequency and high frequency transform coefficients representing a block of residual pixel values derived from a corresponding block of current pixel values and a block of prediction values by an entropy coding/decoding procedure representing low frequency transform coefficients and high frequency coefficients according to a first VLC adjusted to expected occurrence of coefficient values comprising the steps of determining whether the block of prediction values exists or can be derived according to one or more predefined rules, wherein said one or more predefined rules are one or more of the following set of rules: the block of prediction values is calculated by reconstructed pixels spatially just above the block, the block of prediction values is calculated by reconstructed pixels spatially just to the left of the block, if not then inserting a fixed value in the block of prediction values.

### Summary of the invention

It is an object of the present invention to provide an improved entropy coding method compared to the state of the art balancing low complexity with high performance. The features defined in the independent claim enclosed characterise this method.

### Brief description of the drawings

In order to make the invention more readily understandable; the discussion that follows will refer to the accompanying drawing.
Figure 1 shows a block diagram illustrating the main steps of a coding process according to prior art,
Figure 2 shows a block in a left hand upper corner of an image where no pixels for intra prediction is available,
Figure 3 is a table of VLC being used in a PRED mode according to an example embodiment of the present invention,
Figure 4 is a table of VLC being used in a NOPRED mode according to an example embodiment of the present invention.

### Detailed description of the present invention

The present invention provides a method for entropy coding of quantized transform coefficients when for some reason no pixels are available for prediction and the VLC codes which is based on statistics for available prediction data, is inexpediently long. The following description is based on the encoder side, but the present invention applies as well to the decoder side.

A situation of no pixels available for prediction may occur for several reasons. There may be no relevant previous pixel data (inter or intra) available for prediction.

On the other hand, even if inter pixel data is available, there could still be lack of pixel available for prediction, if for some reason only intra prediction is considered, and there are no pixels above or to the left of the block. This situation is depicted in the example with the upper left block of the picture in figure 2.

The same situation would occur if it is desirable, for instance for error resilience purposes, not to use pixels external to the block for prediction.

In these cases where there is no prediction that contains information, it is usual to set the pixel prediction to the mid value of the maximum value. In case of 8 bit (0-255) pixel representation the pixel prediction for the whole block is set to 128. Since this will result in higher residual values than usual, the quantized low frequency transformed coefficients, and especially the DC coefficient will also be higher than usually expected. The result may be that the entropy coding model produces more bits than necessary.

According to one embodiment of the present invention, the encoder continuously monitors whether there is a situation of "no prediction" or not. One of two monitored situations occurs when reasonable prediction is possible or the entropy coding can be done reasonably well with the normal entropy coding procedure. This situation is labelled PRED.

The other situation occurs when no reasonably good prediction can be made, and this leads to coding of events that require unreasonably many bits. This situation is labelled NOPRED.

Some examples of NOPRED situations seen from the decoder are disclosed in the following.

The decoder will first typically receive information of a prediction procedure to be used for a block. This can typically be one of the following:
1) Take the average of the reconstructed pixels just above and just to the left and use this as the prediction
2) Use the reconstructed pixels just above to predict all the pixels in the block.
3) Use the reconstructed pixels just to the left to predict all the pixels in the block.
4) In situations when transmission errors are expected, the indications can be that no decoded pixels shall be used for prediction - available or not.

The reconstructed pixels just above and just to the left may not be available for prediction for different reasons:
a) The pixels may be outside the picture and therefore not available.
b) The picture may be divided in slices for coding. There may be a rule that pixels outside the slice may not be used for prediction. Hence, if the block to be predicted is on a slice boundary, the pixels may not be available for prediction.
c) Pixels just to the left may not be available because the block to the left is being processed in parallel with the present block and the reconstructed pixels from the block to the left are therefore not ready to be used for prediction.

As can be seen, different combinations of 1 - 4 and a)-b) may lead to situations when coding of a block of pixels has to be done without reference to any decoded pixels.

According to the present embodiment of the present invention, when NOPRED is detected certain special-purpose steps are carried out.

First of all in a NOPRED situation, the prediction is set to a fixed value. With 8 bit representation this may typically be 128, as indicated above.

Despite of missing "real" prediction data the encoder is set to a prediction/coding mode so that the encoder/decoder will assume that prediction data still is available.

Then, the encoder/decoder is switch to a different entropy coding strategy where one or a few of the low frequency coefficients are coded separately with VLC tables designed for this situation. The remaining coefficients are still coded with the normal entropy coding procedure, but with the DC coefficients set to zero. The DC coefficient is consequently defined from the special DC coding and all the other coefficients are defined by the normal coding.

When a PRED situation is monitored, however, all the coefficients are coded according to the normal procedure.

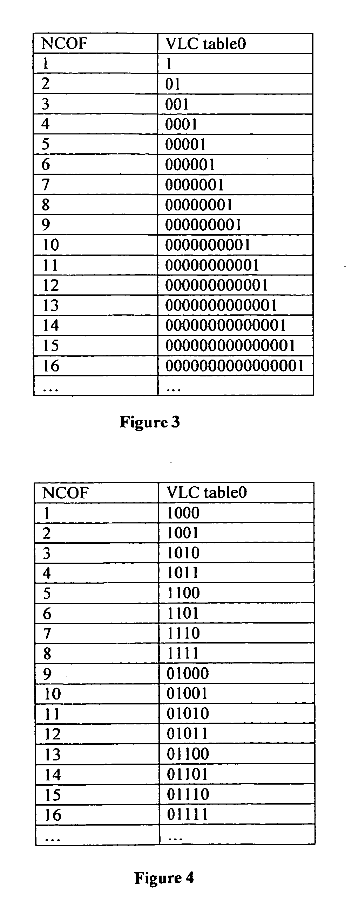

In the PRED situation, the prediction is assumed to be reasonably good and hence the residual to be coded is small. The quantized values to be coded will be integer numbers and many small numbers are to be coded. In this situation a code table with some short code words will be preferable. On the other hand large numbers may also occasionally occur and the VLC table must have the possibility to code also these numbers. These situations will then require many bits, but as they are rare it still does not cost too much in bits. One possible VLC to be used in such a situation is shown in figure 3, with the coefficients in the left column, and the codes in the right column.

This may on average be the best solution, and is the typical characteristics of a commonly used VLC code in normal situations, and hence in PRED situations. Usually very small numbers are to be coded. A large number like 40, on the other hand would need 40 bits to be coded.

Turning now to the NOPRED situation, as earlier mentioned, mainly the coding of a DC coefficient is considered. Since there is no good prediction available, the average value of 128 is used for pixel prediction. The residual to be coded for the DC coefficient in this situation is expected to have a much larger spread than in the PRED situation. This means that the numbers to be coded are typically larger and there are no numbers expected to occur very frequently. Thus, short code words for particular events are not required (and will not be useful) for bit efficiency. In this situation a more suitable VLC is shown in figure 4.

In such a VLC, the shortest code word is 4 bits. On the other hand the number 40 needs 8 bits. The table may consequently use overall fewer bits to code a set of numbers with larger spread.

The present invention is useful in situations where it frequently happen that no pixels are available for prediction a block of pixels. This may typically happen when the coding is done to minimize influence of transmission bit errors. In such situations the method result in a good saving in bit usage. At the same time the implementation cost of the method is minimal.

## Claims

1. A method for coding/decoding quantized low frequency and high frequency transform coefficients representing a block of residual pixel values derived from a corresponding block of current pixel values and a block of prediction values by an entropy coding/decoding procedure representing low frequency transform coefficients and high frequency coefficients according to a first VLC adjusted to expected occurrence of coefficient values,
comprising the steps of:
determining whether the block of prediction values exists or can be derived according to the following set of rules:
the block of prediction values is calculated by reconstructed pixels spatially just above the block, the block of prediction values is calculated by reconstructed pixels spatially just to the left of the block,
the block of prediction values is calculated by averaging reconstructed pixels spatially just above and just to the left of the block, no decoded pixels shall be used for prediction when transmission errors are expected
if not then
inserting a fixed value in the block of prediction values using a second VLC specially adjusted to expected occurrence of coefficient values when the block of prediction values are fixed in representing said low frequency coefficients.

2. A method according to claim 1, wherein
the step of using a second VLC further includes the step of:
representing the low frequency and the high frequency transform coefficients with a first and a second set of coefficients wherein low frequency transform coefficients of the first set of coefficients are represented by said second VLC, high frequency transform coefficients of the first set of coefficients equal zero, low frequency transform coefficients of the second set of coefficients equal zero and high frequency transform coefficients of the second set of coefficients are represented by said first VLC.

3. A method according to claim 1 or 2, wherein
said fixed value is the mid value of maximum possible coefficient value.

## Patentansprüche

1. Verfahren zum Codieren/Decodieren quantisierter Niedrigfrequenz- und Hochfrequenz-Transformationskoeffizienten, die einen Block von Restpixelwerten repräsentieren, der von einem entsprechenden Block von aktuellen Pixelwerten und einem Block von Prädiktionswerten durch ein Entropie-Codier-/Decodierverfahren abgeleitet ist, das Nieärigfrequenz-Transformationskoeffizienten und Hochfrequenz-Koeffizienten repräsentiert, gemäß einem ersten VLC, der auf das erwartete Auftreten von Koeffizientenwerten eingestellt ist, wobei das Verfahren die folgenden Schritte umfasst:
Ermitteln, ob der Block von Prädiktionswerten existiert oder gemäß dem folgenden Regelsatz abgeleitet werden kann:
der Block von Prädiktionswerten wird durch rekonstruierte Pixel räumlich genau über dem Block berechnet,
der Block von Prädiktionswerten wird durch rekonstruierte Pixel räumlich genau links vom Block berechnet,
der Block von Prädiktionswerten wird durch Mitteln rekonstruierter Pixel räumlich genau über und genau links vom Block berechnet,
keine decodierten Pixel sollen zur Prädiktion verwendet werden, wenn Sendefehler erwartet werden,
wenn nicht, dann
Einfügen eines festen Werts in den Block von Prädiktionswerten unter Verwendung eines zweiten VLC, der speziell an das erwartete Auftreten von Koeffizientenwerten angepasst ist, wenn der Block von Prädiktionswerten beim Repräsentieren der Niedrigfrequenzkoeffizienten festgelegt ist.

2. Verfahren nach Anspruch 1, wobei der Schritt des Verwendens eines zweiten VLC des Weiteren den folgenden Schritt umfasst:
Repräsentieren der Niedrigfrequenz- und der Hochfrequenz-Transformationskoeffizienten mit einem ersten und einem zweiten Satz von Koeffizienten, wobei Niedrigfrequenz-Transformationskoeffizienten des ersten Satzes von Koeffizienten durch den zweiten VLC repräsentiert werden, Hochfrequenz-Transformationskoeffizienten des ersten Satzes von Koeffizienten gleich Null sind, Niedrigfrequenz-Transformationskoeffizienten des zweiten Satzes von Koeffizienten gleich Null sind, und Hochfrequenz-Transformationskoeffizienten des zweiten Satzes von Koeffizienten durch den ersten VLC repräsentiert werden.

3. Verfahren nach Anspruch 1 oder 2, wobei der festgelegte Wert der Mittelwert eines maximal möglichen Koeffizientenwerts ist.

## Revendications

1. Procédé de codage/décodage de coefficients de transformation basse fréquence et haute fréquence quantifiés représentant un bloc de valeurs de pixels résiduelles obtenues à partir d'un bloc correspondant de valeurs de pixels actuelles et d'un bloc de valeurs de prévision grâce à une procédure de codage/décodage entropique représentant des coefficients de transformation basse fréquence et des coefficients haute fréquence en fonction d'un premier VLC réglé sur la survenance prévue de valeurs de coefficients,
comprenant les étapes consistant à :
déterminer si le bloc de valeurs de prévision existe ou peut être obtenu en fonction de l'ensemble de règles suivant :
le bloc de valeurs de prévision est calculé grâce aux pixels reconstitués dans l'espace juste au-dessus du bloc,
le bloc de valeurs de prévision est calculé grâce aux pixels reconstitués dans l'espace juste à gauche du bloc,
le bloc de valeurs de prévision est calculé grâce au calcul de la moyenne des pixels reconstitués dans l'espace juste au-dessus et juste à gauche du bloc,
aucun pixel décodé ne doit être utilisé aux fins de prévision lorsque des erreurs de transmission sont prévues,
et sinon,
insérer une valeur fixe dans le bloc de valeurs de prévision au moyen d'un second VLC réglé en particulier par rapport à la survenance prévue de valeurs de coefficient lorsque le bloc de valeurs de prévision sont fixes dans la représentation desdits coefficients basse fréquence.

2. Procédé selon la revendication 1, dans lequel l'étape d'utilisation d'un second VLC comprend en outre l'étape consistant à :
représenter des coefficients de transformation basse fréquence et haute fréquence avec un premier et un second ensembles de coefficients dans lesquels les coefficients de transformation basse fréquence du premier ensemble de coefficients sont représentés par ledit second VLC, les coefficients de transformation haute fréquence du premier ensemble de coefficients égaux à zéro, les coefficients de transformation basse fréquence du second ensemble de coefficients égaux à zéro et les coefficients de transformation haute fréquence du second ensemble de coefficients sont représentés par ledit premier VLC.

3. Procédé selon la revendication 1 ou 2, dans lequel ladite valeur fixe est la valeur intermédiaire de la valeur de coefficient possible maximale.
